# EUROPÄISCHE PATENTSCHRIFT

(11) **EP 0 677 697 B1**
(45) Veröffentlichungstag und Bekanntmachung des Hinweises auf die Patenterteilung: **30.12.1998**
(21) Anmeldenummer: 94110305.3
(22) Anmeldetag: 02.07.1994
(51) Int. Cl.: F21S 3/02, F21V 23/04, F21S 5/00

(54) **Arbeitsplatzleuchte**
Workplace light fixture
Appareil d'éclairage pour plan de travail

(30) Priorität: 15.04.1994 DE 4413070
(43) Veröffentlichungstag der Anmeldung: 18.10.1995
(73) Patentinhaber: THORN LICHT GmbH, D-59755 Arnsberg (DE)
(72) Erfinder: Zembrot, Dietmar, Dipl.-Ing., D-59846 Sundern (DE)
(74) Vertreter: Fritz, Edmund Lothar, Dipl.-Chem.

(56) Entgegenhaltungen:
- EP-A- 0 061 527
- AT-B- 374 258
- AT-B- 376 781

## Beschreibung

Die vorliegende Erfindung betrifft eine an einer Decke aufhängbare Arbeitsplatzleuchte mit Raster, die einen eingebauten Helligkeitssensor aufweist, nach dem Oberbegriff des Patentsanspruchs 1. Eine solche Arbeitsplatzleuchte ist aus der AT-B-376781 bekannt geworden. Diese bekannte Arbeitsplatzleuchte hat in Lampenlängsrichtung gesehen drei Teilabschnitte und der Helligkeitssensor ist in dem mittleren Bereich angeordnet, aus dem kein Licht austritt. Bei dieser Arbeitsplatzleuchte fehlt jedoch ein Lichtstromanteil, der von der Lampe ausgehend nach oben hin austritt und der neben der Arbeitsplatzbeleuchtung auch eine Allgemeinbeleuchtung durch Reflexion dieses Lichtanteils an der Raumdecke liefert.

Die EP-A-0061527 beschreibt eine Arbeitsplatzleuchte, die einen Lichtstromanteil aufweist, der aus der Leuchte nach oben hin austritt. Bei dieser bekannten Leuchte fehlen jedoch wesentliche Mittel, die für die Entblendung von Lichtstromanteilen, die auf den Arbeitsplatz fallen, dienen.

Eine weitere Arbeitsplatzleuchte ist aus der DE-36 90 105 (A1) bekannt geworden. Durch den Helligkeitssensor kann sowohl der aufgrund einer zusätzlichen Allgemeinbeleuchtung vorhandene Lichtanteil als auch der Tageslichtanteil am Arbeitsplatz erfaßt werden und das Beleuchtungsniveau durch Regelung der Lichtquelle kann dann automatisch so eingeregelt werden, daß am Arbeitsplatz zum Beispiel immer ein vom Anwender vorher eingestellter gewünschter Beleuchtungsstärkelevel herrscht. Dadurch kann der für die Beleuchtung am Arbeitsplatz notwendige Energiebedarf auf ein Minimum reduziert werden. Bei der vorbekannten Arbeitsplatzleuchte handelt es sich um eine unmittelbar an der Decke angebrachte Leuchte. Der Helligkeitssensor ist an einem Ende der Leuchte innerhalb eines röhrenförmigen Schutzelements untergebracht. In der genannten Schrift finden sich keine Ausführungen betreffend den lichttechnischen Aufbau der Leuchte selbst und keine detaillierten Angaben zu den aus der Leuchte austretenden Lichtströmen. Die Anordnung der Leuchte in Bezug auf den auszuleuchtenden Arbeitsplatz ist recht ungünstig.

Ausgehend von dem eingangs genannten Stand der Technik besteht die Aufgabe der vorliegenden Erfindung darin, eine Arbeitsplatzleuchte der eingangs genannten Art lichttechnisch zu optimieren, wobei die Arbeitsplatzleuchte gleichzeitig stromsparend sein soll und der Vorteil einer Anpassung der abgegebenen Lichtmenge der Leuchte an die Helligkeit der jeweiligen Umgebung beibehalten wird.

Die Lösung dieser Aufgabe liefert eine erfindungsgemäße Arbeitsplatzleuchte der eingangs genannten Art mit den kennzeichnenden Merkmalen des Hauptanspruchs. Erfindungsgemäß ist vorgesehen, daß das Leuchtenraster in den beiden äußeren Leuchtenabschnitten so ausgebildet ist, daß ein direkter Lichtstromanteil unmittelbar von der Lampe ausgehend nach oben hin aus der Leuchte austritt und auch ein indirekter Lichtstromanteil nach oben hin austritt, der an Längsreflektoren reflektiert wird und das ein nach unten hin aus der Leuchte austretender Lichtstromanteil unmittelbar von der Lampe ausgehend direkt austritt und nach unten hin ein indirekter Lichtstromanteil austritt, der an Längsreflektoren reflektiert und in Richtung auf den zu beleuchtenden Arbeitsplatz fokussiert wird, wobei unterhalb der Lampen ein horizontales Lochblech in den beiden äußeren Leuchtenabschnitten angeordnet ist und kurz unterhalb des Lochblechs an beiden Seiten ein jeweils von den Längsreflektoren aus sich horizontal ins Leuchteninnere erstreckendes Abschattblech vorgesehen ist, durch das sich der Lichtanteil, der nach unten hin aus der Leuchte austritt, verringert und derjenige Lichtanteil, der nach oben hin aus der Leuchte austritt, erhöht.

Wenn in dieser Anmeldung davon gesprochen wird, daß die Beleuchtungsstärke am Arbeitsplatz mittels eines Helligkeitssensors gemessen wird, dann ist gemeint, daß der Helligkeitssensor eine Leuchtdichte mißt, die sich ergibt aus der Beleuchtungsstärke auf der Arbeitsfläche multipliziert mit dem Reflektionsgrad der Arbeitsfläche, dividiert durch die Konstante π. Dies bedeutet, daß die gemessene Leuchtdichte der Beleuchtungsstärke proportional ist und solange sich der Reflektionsgrad nicht ändert, aus der Leuchtdichte auf die Beleuchtungsstärke geschlossen werden kann.

Die erfindungsgemäße Arbeitsplatzleuchte ist somit im wesentlichen zu einer quer verlaufenden Mittelebene symmetrisch aufgebaut. Die aus den äußeren Leuchtenabschnitten austretenden Lichtstromanteile werden so gelenkt, daß sie auf das zu beleuchtende Arbeitsfeld fallen. Der in dem mittleren Abschnitt der Leuchte angeordnete Helligkeitssensor mißt vorzugsweise innerhalb eines kegelförmigen Bereichs und erfaßt die Beleuchtungsstärke auf der Oberfläche des Schreibtisches am Arbeitsplatz. Vorzugsweise ist in diesem mittleren geschlossenen Leuchtenabschnitt ohne Lichtaustritt ein zum Beispiel auf Infrarotbasis arbeitender Bewegungsmelder angeordnet, der Bewegungen im Bereich des Arbeitsplatzes erfaßt und mit einem Schalter in Verbindung steht, der die Leuchte automatisch dann einschaltet, wenn Bewegungen durch eine Person im erfaßten Bereich am Arbeitsplatz registriert werden. Dies hat den Vorteil, daß dann, wenn sich keine Person am Arbeitsplatz aufhält, die Leuchte abgeschaltet werden kann, was zu einer weiteren Energieeinsparung führt.

Der Bewegungsmelder kann zum Beispiel so eingestellt sein, daß die Leuchte dann ausgeschaltet wird, wenn dieser innerhalb eines vorher gewählten Zeitraums von zum Beispiel 10 oder 15 Minuten keine Bewegung am Arbeitsplatz registriert.

Vorzugsweise handelt es sich bei der erfindungsgemäßen Arbeitsplatzleuchte um eine solche, die im Abstand von der Decke über dem auszuleuchtenden Arbeitsplatz oberhalb und vor der am Arbeitsplatz sitzenden Person so aufgehängt ist, daß diese Person schräg von unten auf die Längsseite der langgestreckten Arbeitsplatzleuchte schaut.

Die erfindungsgemäße Arbeitsplatzleuchte ist im Bereich der Lichtaustrittsöffnungen der beiden äußeren Leuchtenabschnitte nach oben hin offen, so daß ein Lichtstromanteil nach oben hin zur Decke austritt, wobei ein weiterer Lichtstromanteil im Bereich der Lichtaustrittsöffnungen unmittelbar nach unten hin in Richtung auf den Arbeitsplatz austritt. Das Leuchtenraster ist in den beiden äußeren Leuchtenabschnitten so ausgebildet, daß sowohl ein direkter Lichtstromanteil unmittelbar von der Lampe ausgehend nach oben hin zur Decke austritt als auch ein indirekter Lichtstromanteil, der an Längsreflektoren reflektiert wird und nach oben hin zur Decke austritt. Auch der nach unten hin aus der Leuchte austretende Lichtstromanteil unterteilt sich in einen direkten Lichtstromanteil, der unmittelbar von der Lampe aus in einem zu den Seiten hin begrenzten Austrittswinkel nach unten hin austritt, so daß sich eine Ausblendung unter flachen Winkeln ergibt und einen indirekten nach unten hin austretenden Lichtstromanteil, der sich durch Reflexion des von den Lampen kommenden Lichtstroms an Längsreflektoren ergibt. Dieser indirekte reflektierte Lichtstromanteil wird in Richtung auf den zu beleuchtenden Arbeitsplatz fokussiert.

Gemäß der Erfindung ist zusätzlich unterhalb der Lampen ein horizontales Lochblech in den äußeren Leuchtenabschnitten angeordnet, mittels dessen man die Glanzbildung auf der Arbeitsfläche vermindern kann und durch das man auch die sichtbare Rasterleuchtdichte verringern kann.

Vorzugsweise sind weiterhin parallele beabstandete quer zur Lampenlängsrichtung verlaufende Querlamellen für die Lichtlenkung vorgesehen.

Die erfindungsgemäße Arbeitsplatzleuchte hat vorzugsweise einen relativ flachen Aufbau mit einem flachen Gehäuse, und die Lampen sind vorzugsweise etwa im oberen Drittel und etwa im mittleren Bereich des Leuchtengehäuses zwischen den Längsreflektoren angeordnet. Es können als Leuchtmittel zum Beispiel Kompaktleuchtstofflampen verwendet werden, wobei in jedem der beiden äußeren Leuchtenabschnitte je eine Kompaktleuchtstofflampe mit beispielsweise zwei verbundenen Leuchtstoffröhren angeordnet sein kann, deren Achsen zum Beispiel symmetrisch und parallel zur Mittelebene der Leuchte in Leuchtenlängsrichtung verlaufen.

Vorzugsweise sind in jedem äußeren Leuchtenabschnitt je zwei die Lichtaustrittsöffnung jeweils an beiden Seiten begrenzende untere Längsreflektoren vorgesehen, die vorzugsweise konkav gekrümmt sind, um das Licht in Richtung auf den Arbeitsplatz zu fokussieren und die sich vorzugsweise über die horizontale Mittelebene des Leuchtengehäuses hinaus nach oben erstrecken, so daß diese Längsreflektoren in etwa bis in zwei Drittel der Höhe des Leuchtengehäuses reichen. Die unteren Längsreflektoren sind vorzugsweise konkav und zur Vertikalen nach unten hin und nach innen hin in einem spitzen Winkel geneigt ausgerichtet, während die oberen Längsreflektoren vorzugsweise ebenfalls konkav gekrümmt sind, aber in einem spitzen Winkel nach innen und nach oben hin zur Vertikalen geneigt sind, so daß die unteren Längsreflektoren und die oberen Längsreflektoren in einem Winkel von mehr als 180° aufeinander stoßen.

Der mittlere Leuchtenabschnitt, aus dem kein Licht austritt, bietet Platz für die Anordnung sowohl des Helligkeitssensors als auch des gemäß der Erfindung vorzugsweise vorhandenen Bewegungsmelders. Damit befinden sich Helligkeitssensor und Bewegungsmelder in etwa mittig über dem Arbeitsplatz. Der sensitive Bereich des Bewegungsmelders, innerhalb dessen dieser Bewegungen registriert, ist dabei so groß gewählt, daß er die Bewegungen der vor dem Arbeitstisch und schräg unter der Arbeitsplatzleuchte sitzenden Person erfaßt. Der mittlere Leuchtenabschnitt enthält vorzugsweise auch die Elektronik für die Steuerung der Vorschaltgeräte der Leuchtstofflampen, um diese ein und aus zu schalten bzw. zu dimmen. Das Vorschaltgerät kann beispielsweise so eingestellt werden, daß eine Reduzierung der an die Lampen abgegebenen Leistung um zum Beispiel 25 % möglich ist.

Im folgenden wird die vorliegende Erfindung anhand von Ausführungsbeispielen unter Bezugnahme auf die beiliegenden Zeichnungen näher beschrieben. Dabei zeigen
- Fig. 1: eine schematisch vereinfachte Seitenansicht einer über einem Arbeitsplatz angeordneten erfindungsgemäßen Leuchte;
- Fig. 2: eine entsprechende schematisch vereinfachte Darstellung der über einem Arbeitsplatz angeordneten erfindungsgemäßen Leuchte in Richtung der Leuchtenlängsachse gesehen;
- Fig. 3: eine schematisch vereinfachte Draufsicht auf die erfindungsgemäße Leuchte und den Arbeitsplatz;
- Fig. 4: zeigt einen Querschnitt durch eine Arbeitsplatzleuchte gemäß der Erfindung;
- Fig. 5: zeigt einen Längsschnitt durch eine Arbeitsplatzleuchte gemäß der Erfindung;
- Fig. 6: zeigt eine Ansicht des mittleren Abschnitts einer erfindungsgemäßen Arbeitsplatzleuchte von unten ohne Abdeckung;
- Fig. 7: zeigt einen Querschnitt durch die Arbeitsplatzleuchte im mittleren Leuchtenabschnitt.

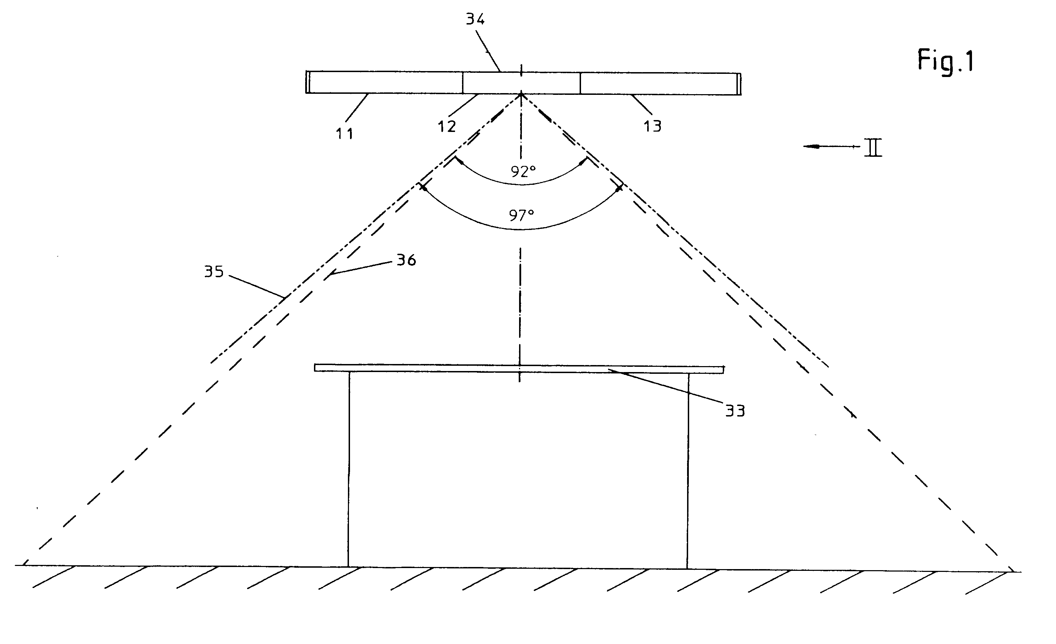

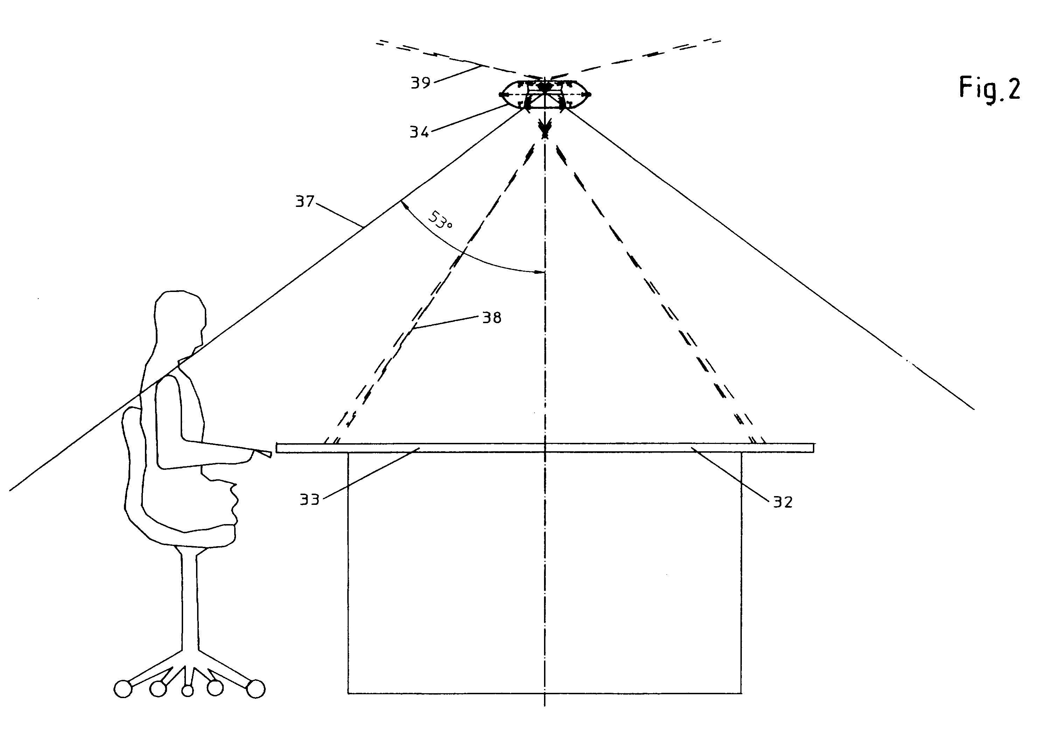

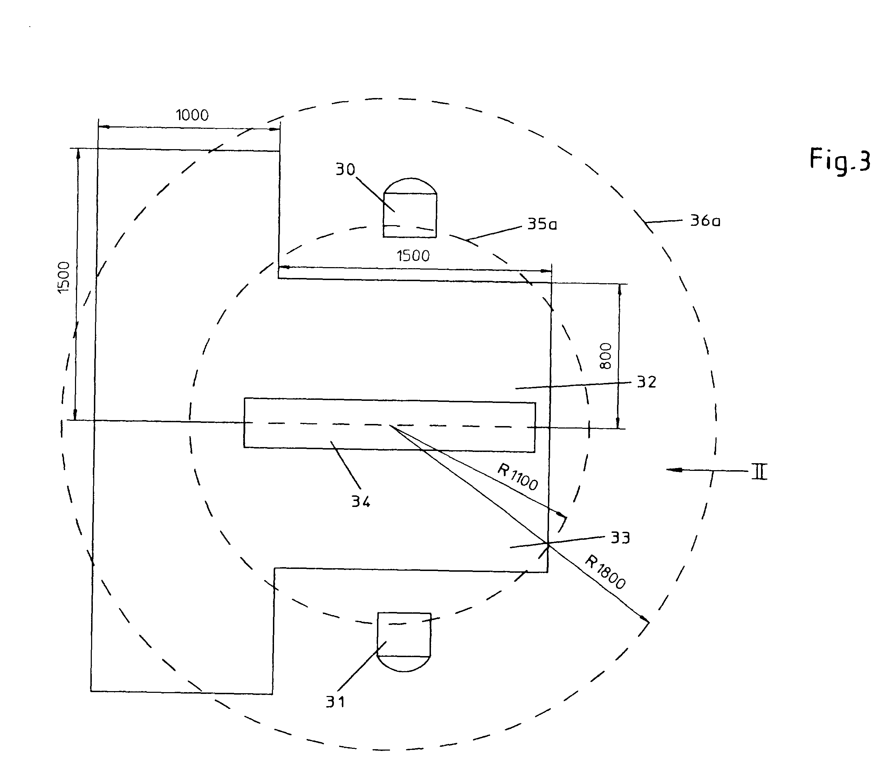

Zunächst wird auf die Fig. 1 bis 3 Bezug genommen und anhand dieser die Anordnung der erfindungsgemäßen Leuchte in Bezug auf den beziehungsweise die Arbeitsplätze erläutert. Wie man aus Fig. 3 erkennt, handelt es sich bei dem vorliegenden Ausführungsbeispiel um einen Doppelarbeitsplatz, der ausgeleuchtet wird, bei dem die beiden Personen vor zwei Kopf an Kopf gegeneinandergestellten Arbeitstischen etwa die Sitzpositionen 30 und 31 einnehmen. Die Schreibtische 32, 33 sind Kopf an Kopf gegeneinandergestellt. Die erfindungsgemäße Arbeitsplatzleuchte 34 hängt über dem Bereich, in dem die beiden Arbeitstische aneinanderstoßen und zwar so, daß die an den beiden Arbeitsplätzen sitzenden Personen von schräg unten jeweils auf die Längsseite der Arbeitsplatzleuchte 34 schauen. Man kann dies auch in Fig. 2 recht gut erkennen. Schaut man von der Seite gemäß Fig. 2, dann sieht man, daß in dem Ausführungsbeispiel die Arbeitsplatzleuchte 34 in einer Höhe von etwa 1000 mm über der Arbeitsfläche aufgehängt ist, die Höhe der Arbeitsfläche auf dem Schreibtisch beträgt etwa 750 mm, die Breite der Schreibtische beträgt in dem Bereich, in dem die beiden Personen sitzen zwei mal 800 mm. Die Höhe der Leuchte selbst beträgt nur 80 mm. Fig. 1 zeigt die Arbeitsplatzleuchte 34 von der Längsseite her gesehen also so, wie sie die am Arbeitsplatz sitzende Person sieht. Man sieht, daß die Leuchte 34 in Längsrichtung gesehen unterteilt ist in drei Abschnitte, einen ersten äußeren Leuchtenabschnitt 11 mit einer Lichtaustrittsöffnung nach unten und nach oben hin, einen zweiten äußeren Leuchtenabschnitt 13 mit einer Lichtaustrittsöffnung nach unten und nach oben hin und einen mittleren Leuchtenabschnitt 12, aus dem kein Licht austritt. In diesem mittleren Leuchtenabschnitt 12 ist der Helligkeitssensor 15 und der Bewegungsmelder 16 untergebracht, sowie die erforderliche Elektronik für den Betrieb dieser Einrichtungen und Steuerung der Leuchtstofflampen in den beiden anderen Leuchtenabschnitten. Der Helligkeitssensor 15 erfaßt etwa einen kegelförmigen Raumsektor 35 mit einem Öffnungswinkel von 97° wie er in Fig. 1 dargestellt ist. Der Bewegungsmelder 16 erfaßt ebenfalls einen etwa kegelförmigen Raumwinkelbereich mit einem Öffnungswinkel von 92° entsprechend dem inneren Winkelsektor 36 in der Zeichnung gemäß Fig. 1. In Fig. 2 ist einmal der Lichtkegel 37 des nach unten direkt austretenden Lichtanteils dargestellt, entsprechend einem Ausblendwinkel von 53° zur Vertikalen. Dadurch ist gewährleistet, daß die am Arbeitsplatz sitzende Person von dem direkt nach unten austretenden Licht nicht geblendet wird. Der indirekt nach unten hin austretende Lichtanteil 38 ist in Fig. 2 ebenfalls dargestellt. Ebenso der nach oben hin aus der Leuchte austretende Lichtanteil 39. Dieses Licht wird von der Raumdecke zurückgeworfen und am Arbeitsplatz als zusätzlicher diffuser Lichtanteil wirksam. Selbstverständlich sind alle vorgenannten Maßangaben betreffend die Leuchte und deren Anordnung nur beispielhaft.

In Fig. 3 sind durch die Kreise 35a, 36a noch einmal die Bereiche gekennzeichnet, die von dem Helligkeitssensor beziehungsweise dem Bewegungsmelder erfaßt werden. Der Kreis 35a entspricht der Schnittlinie zwischen dem kegelförmigen Bereich 35 (siehe Fig. 1) des Helligkeitssensors und der Ebene der Tischoberfläche. Der Kreis 36a entspricht der Schnittlinie zwischen dem kegelförmigen Bereich 36 (siehe Fig. 1), den der Bewegungsmelder erfaßt und dem Bodenniveau. Wie man sieht, erfaßt somit der Bewegungsmelder alle Bewegungen im Bereich der beiden Arbeitsplätze der in den Positionen 30 beziehungsweise 31 sitzenden Personen. Der Helligkeitssensor erfaßt die Beleuchtungsstärke auf der Tischoberfläche der beiden Arbeitsplätze 32, 33.

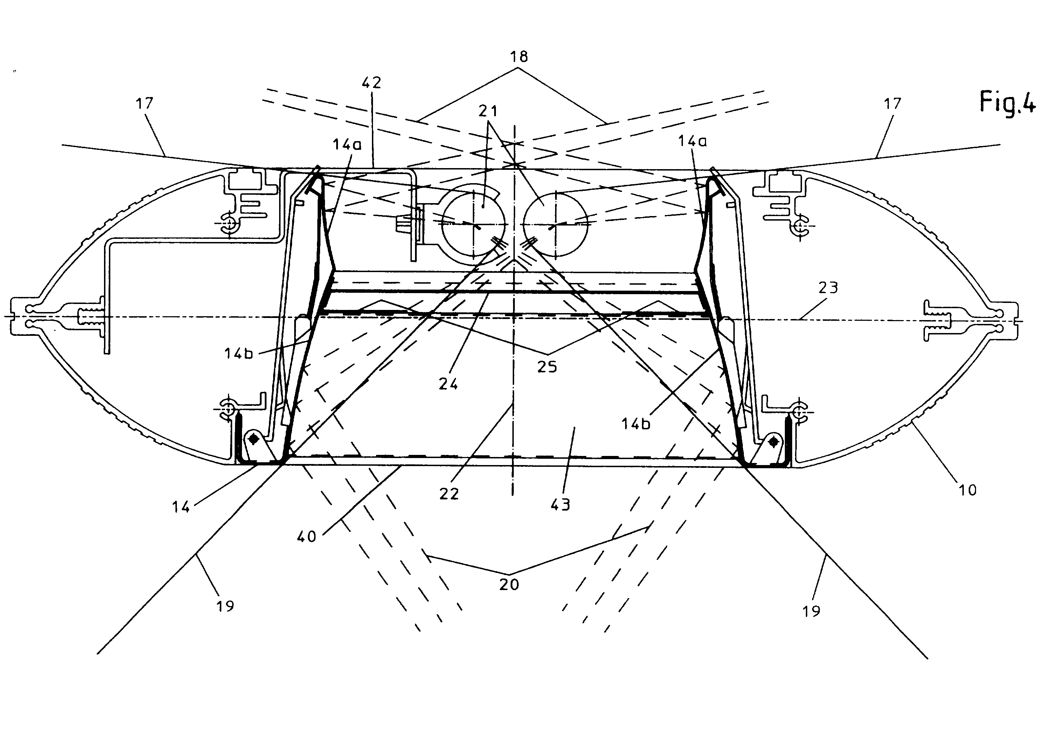

Nachfolgend wird die Lichttechnik der erfindungsgemäßen Arbeitsplatzleuchte unter Bezugnahme auf die Fig. 4 bis 7 näher beschrieben. Fig. 4 zeigt einen Querschnitt durch die erfindungsgemäße Arbeitsplatzleuchte im Bereich einer der beiden äußeren Leuchtenabschnitte 11 oder 13 mit Lichtaustrittsöffnung. Wie man sieht hat die Leuchte ein jeweils an den Längsseiten geschlossenes Leuchtengehäuse 10, eine Lichtaustrittsöffnung 40 nach unten und eine Lichtaustrittsöffnung 41 nach oben zur Decke hin. Es sind obere Längsreflektoren 14a vorhanden, an denen ein Teil der von der Leuchtstofflampe 21 kommenden Lichtstrahlen nach oben hin zur Decke reflektiert wird. Dies ergibt den nach oben austretenden direkten Lichtstromanteil 18. Außerdem tritt nach oben hin zur Decke unmittelbar von der Lampe ausgehend in einem relativ weiten Winkel der direkte Lichtstromanteil 17 aus. Die beiden oberen Längsreflektoren 14a befinden sich etwa in Höhe der Leuchtstofflampe 21. Es handelt sich um eine Kompaktleuchtstofflampe mit zwei parallelen Ästen, die symmetrisch zur senkrechten Mittelebene 22 der Leuchte rechts und links von dieser Ebene und mit ihrer Achse in Leuchtenlängsrichtung angeordnet sind. Die Kompaktleuchtstofflampe 21 ist an einer seitlich in den oberen Reflektorraum hineinragenden Halterung 42 befestigt.

Die oberen Längsreflektoren 14a sind konkav gekrümmt und zur Vertikalen in einem spitzen Winkel nach innen und nach oben hin geneigt, so daß die unteren Enden dieser Längsreflektoren 14a weiter im Leuchteninneren liegen als die oberen Enden. Im Bereich dieser unteren Enden stoßen diese oberen Längsreflektoren 14a in einem Winkel von mehr als 180° auf die größeren unteren Längsreflektoren 14b. Diese unteren Längsreflektoren 14b erstrecken sich von der unteren Lichtaustrittsöffnung 40 aus gesehen etwa bis in zwei Drittel der Höhe des Leuchtengehäuses 10 und bis in einen Bereich, der relativ nahe bis an die Leuchtstofflampe 21 heranreicht. Auch diese unteren Längsreflektoren 14b sind konkav gekrümmt und zur Vertikalen geneigt, jedoch in einem Winkel zur Vertikalen nach unten und nach innen hin geneigt, das heißt die unteren Längsreflektoren 14b haben eine umgekehrte Neigung wie die oberen Längsreflektoren 14a. Quer zu den Längsreflektoren 14b verlaufen im unteren Gehäusebereich parallele in Abständen angeordnete Querlamellen 43. Im mittleren Gehäusebereich ist unterhalb des oberen Endes der Längsreflektoren 14b ein horizontales Lochblech 24 angeordnet, das sich zwischen den beiden gegenüberliegenden Längsreflektoren 14b erstreckt und das der Verringerung der sichtbaren Rasterleuchtdichte dient. Anstelle dieses Lochblechs 24 kann man auch ein opales Glas anordnen. Dieses Lochblech 24 muß nicht unbedingt vorhanden sein.

Kurz unterhalb des Lochblechs ist außerdem noch an beiden Seiten ein jeweils von den Längsreflektoren 14b aus sich horizontal ins Leuchteninnere erstreckendes Abschattblech 25 vorgesehen, durch das erreicht wird, daß sich der Lichtanteil, der nach unten hin aus der Leuchte austritt verringert und dafür derjenige Lichtanteil, der nach oben hin aus der Leuchte austritt erhöht. Der nach unten hin unmittelbar von der Lampe ausgehend direkt aus der Leuchte austretende Lichtstromanteil ist mit dem Bezugszeichen 19 gekennzeichnet. Der nach unten hin nach Reflektion an den Längsreflektoren 14b austretende indirekte Lichtstromanteil, der in Richtung auf den zu beleuchtenden Arbeitsplatz fokussiert wird, ist mit 20 bezeichnet.

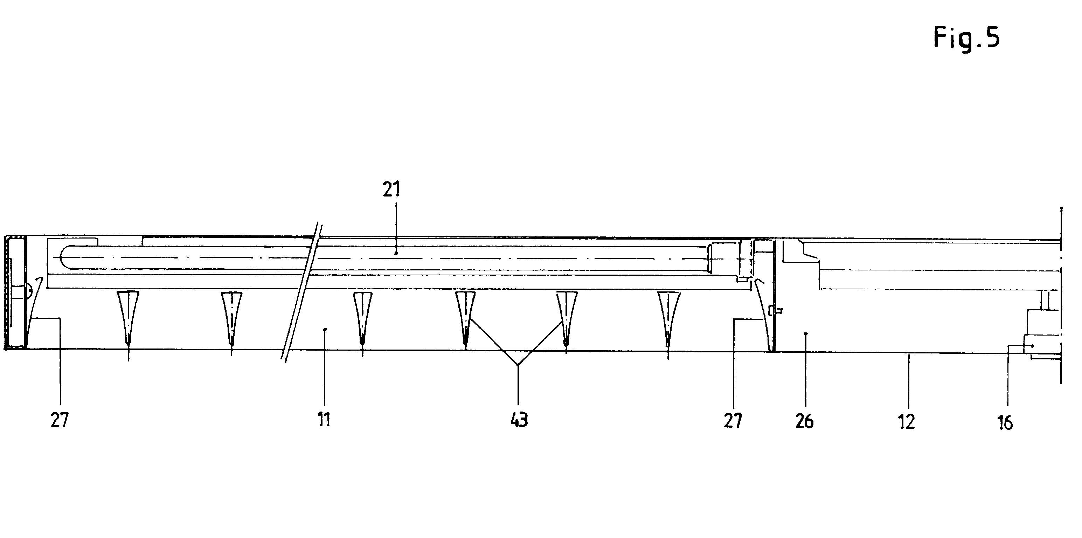

Fig. 5 zeigt nun einen Längsschnitt durch einen Teil der erfindungsgemäßen Arbeitsplatzleuchte. Und zwar ist ein Schnitt durch den einen äußeren Leuchtenabschnitt 11 und einen Teil des mittleren nach unten hin geschlossenen Leuchtenabschnitts 12 dargestellt. Der zweite äußere Leuchtenabschnitt 13 ist nicht dargestellt, da dieser im Prinzip in gleicher Weise aufgebaut ist. Man erkennt die einseitig gesockelte Kompaktleuchtstofflampe 21 und die parallel in Abständen angeordneten nach unten hin spitz zulaufenden V-förmigen Querlamellen 43 mit konkaver etwa parabolischer Krümmung an beiden Schenkeln. Man sieht weiter, daß der mittlere Leuchtenabschnitt 12 durch eine untere Abdeckung 26 geschlossen ist. Außerdem ist ein Teil des Infrarotsensors 16 dargestellt, der als Bewegungsmelder dient. Die Lichtaustrittsöffnung des äußeren Leuchtenabschnitts 11 wird an ihren beiden Enden jeweils durch kopfseitige Reflektoren 27 begrenzt, die in Leuchtenquerrichtung verlaufen und ebenfalls in einem Winkel nach unten hin und nach innen zur Vertikalen geneigt sind und eine etwa parabolische Krümmung aufweisen.

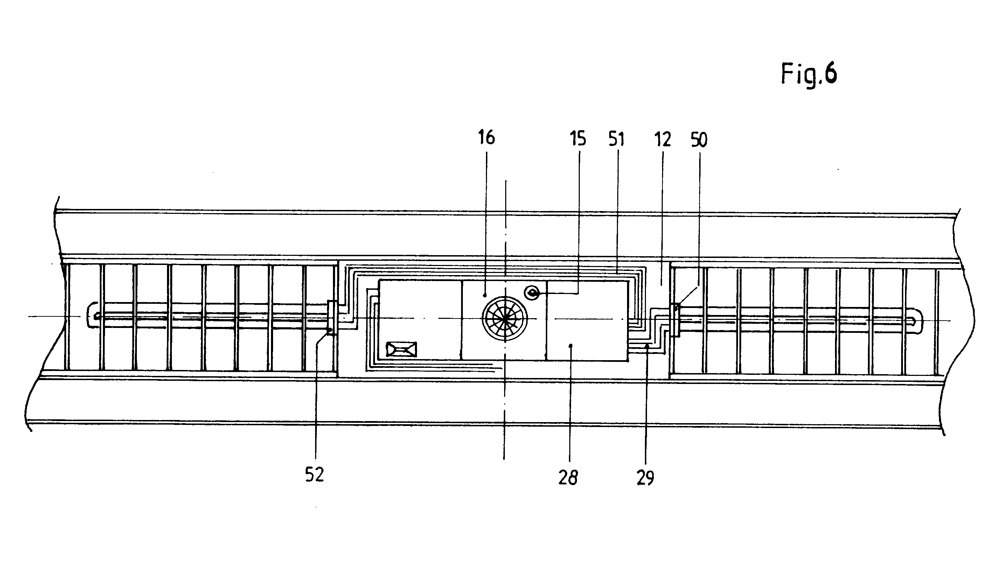

Fig. 6 zeigt eine Teilansicht einer erfindungsgemäßen Arbeitsplatzleuchte in schematischer Ansicht von unten. Man erkennt die drei Leuchtenabschnitte, nämlich die beiden äußeren Leuchtenabschnitte 11, 13 und den mittleren Leuchtenabschnitt 12. Bei dem mittleren Leuchtenabschnitt 12 wurde die Abdeckung 26 nach unten hin entfernt, so daß man den in diesem Leuchtenabschnitt untergebrachten Bewegungsmelder 16 sowie die elektrischen Installationen, Verbindungsleitungen, Anschlußklemmen etc. erkennen kann. Von dem elektronischen Vorschaltgerät 28 führen Verbindungsleitungen 29 zur Fassung 50 der einen Leuchtstofflampe für den äußeren Leuchtenabschnitt 13. Ebenso führen Verbindungsleitungen 51 vom elektronischen Vorschaltgerät 28 zu der Fassung 52 der Leuchtstofflampe für den anderen äußeren Leuchtenabschnitt 11. Neben dem Bewegungsmelder 16 ist der Helligkeitssensor 15 dargestellt.

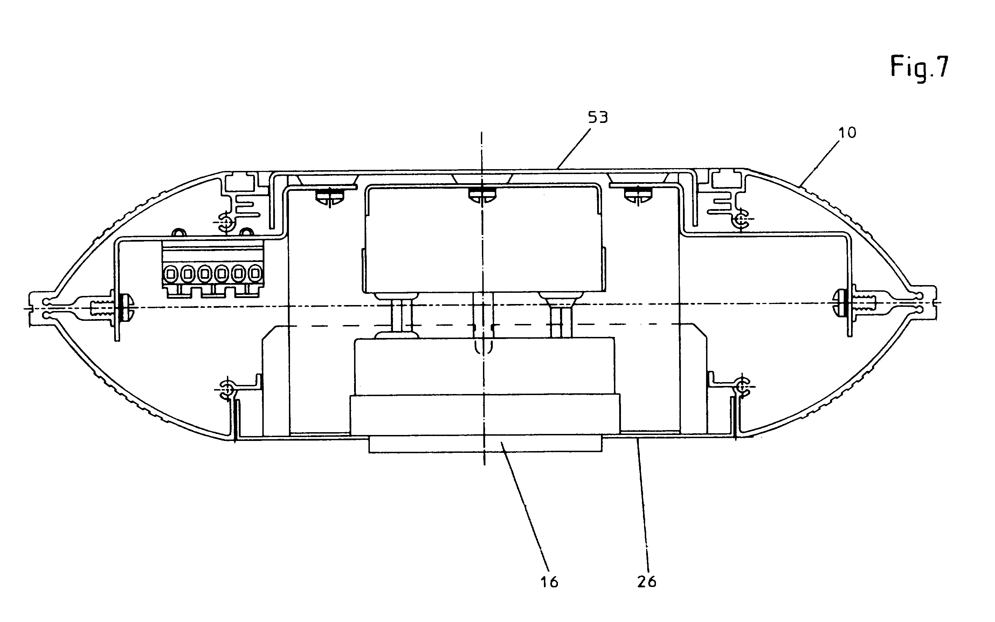

Fig. 7 zeigt einen Querschnitt durch die Leuchte im Bereich des mittleren Leuchtenabschnitts 12. Man erkennt, daß dieser Leuchtenabschnitt die gleiche Form des äußeren Gehäuses 10 aufweist wie die beiden äußeren Leuchtenabschnitte. Nach unten hin ist der mittlere Leuchtenabschnitt durch die Abdeckung 26 verschlossen. Nach oben hin ist der mittlere Leuchtenabschnitt durch die Abdeckung 53 verschlossen. In die untere Abdeckung 26 ist der Bewegungsmelder 16 eingebaut sowie der Helligkeitssensor 15 (in der Zeichnung nicht dargestellt).

## Patentansprüche

1. An einer Decke aufhängbare Arbeitsplatzleuchte mit Raster, die einen eingebauten Helligkeitssensor aufweist, der die Beleuchtungsstärke im Bereich der Arbeitsfläche innerhalb eines begrenzten Raumwinkelbereichs erfaßt, wobei eine Regelung der Lichtquelle der Arbeitsplatzleuchte in Abhängigkeit der erfaßten Beleuchtungsstärke im Bereich der Arbeitsfläche vorgesehen ist, wobei die Leuchte in Lampenlängsrichtung gesehen drei Teilabschnitte aufweist, und zwar einen ersten äußeren Leuchtenabschnitt (11) mit Lichtaustrittsöffnung und eingebautem Leuchtenraster (14) zur Lichtlenkung, einem zweiten mittleren Leuchtenabschnitt (12), aus dem kein Licht austritt, in dessen Bereich der Helligkeitssensor (15) angeordnet ist und einem dritten äußeren Leuchtenabschnitt (13) mit Lichtaustrittsöffnungen und eingebautem Leuchtenraster (14) zur Lichtlenkung, der ähnlich aufgebaut ist wie der erste äußere Leuchtenabschnitt (11),
dadurch gekennzeichnet, daß das Leuchtenraster (14) in den beiden äußeren Leuchtenabschnitten (11, 13) so ausgebildet ist, daß ein direkter Lichtstromanteil (17) unmittelbar von der Lampe ausgehend nach oben hin aus der Leuchte austritt und auch ein indirekter Lichtstromanteil (18) nach oben hin austritt, der an Längsreflektoren (14a) reflektiert wird und daß ein nach unten hin aus der Leuchte austretender Lichtstromanteil (19) unmittelbar von der Lampe ausgehend direkt austritt und nach unten hin ein indirekter Lichtstromanteil (20) austritt, der an Längsreflektoren (14b) reflektiert und in Richtung auf den zu beleuchtenden Arbeitsplatz fokussiert wird, wobei unterhalb der Lampen (21) ein horizontales Lochblech (24) in den beiden äußeren Leuchtenabschnitten (11, 13) angeordnet ist und kurz unterhalb des Lochblechs (24) an beiden Seiten ein jeweils von den Längsreflektoren (14b) aus sich horizontal ins Leuchteninnere erstreckendes Abschattblech (25) vorgesehen ist, durch das sich der Lichtanteil, der nach unten hin aus der Leuchte austritt, verringert und derjenige Lichtanteil, der nach oben hin aus der Leuchte austritt erhöht.

2. Arbeitsplatzleuchte nach Anspruch 1, dadurch gekennzeichnet, daß in dem mittleren geschlossenen Leuchtenabschnitt (12) ohne Lichtaustritt ein vorzugsweise auf Infrarotbasis arbeitender Bewegungsmelder (16) angeordnet ist, der mit einem Schalter (17) in Verbindung steht, der die Leuchte automatisch einschaltet, wenn Bewegungen im Bereich des Arbeitsplatzes registriert werden und die Leuchte automatisch ausschaltet, wenn über einen längeren Zeitraum keine Bewegungen mehr registriert werden.

3. Arbeitsplatzleuchte nach Anspruch 1 oder 2, dadurch gekennzeichnet, daß diese im Abstand von der Decke über dem auszuleuchtenden Arbeitsplatz oberhalb und vor der am Arbeitsplatz sitzenden Person aufgehängt ist.

4. Arbeitsplatzleuchte nach einem der Ansprüche 1 bis 3, dadurch gekennzeichnet, daß die Lampen (21) etwa im oberen Drittel des Leuchtengehäuses (10) und in Leuchtenlängsrichtung angeordnet sind.

5. Arbeitsplatzleuchte nach einem der Ansprüche 1 bis 4, dadurch gekennzeichnet, daß in jedem der beiden äußeren Leuchtenabschnitte (11, 13) je eine Kompaktleuchtstofflampe mit verbundenen Leuchtstoffröhren angeordnet ist, deren Achsen symmetrisch und parallel zur vertikalen Mittelebene (22) der Leuchte in Leuchtenlängsrichtung verlaufen.

6. Arbeitsplatzleuchte nach einem der Ansprüche 1 bis 5, dadurch gekennzeichnet, daß in jedem äußeren Leuchtenabschnitt (11, 13) je zwei die Lichtaustrittsöffnung jeweils an beiden Seiten begrenzende untere Längsreflektoren (14b) vorgesehen sind, die vorzugsweise konkav gekrümmt sind und die sich über die horizontale Mittelebene (23) des Leuchtengehäuses (10) hinaus nach oben erstrecken und in einem Winkel zur Vertikalen nach unten und nach innen hin geneigt ausgerichtet sind.

7. Arbeitsplatzleuchte nach einem der Ansprüche 1 bis 6, dadurch gekennzeichnet, daß sich an die unteren Längsreflektoren (14b) obere Längsreflektoren (14a) anschließen, die vorzugsweise konkav gekrümmt sind und in einem spitzen Winkel nach innen und nach oben hin zur Vertikalen geneigt sind und mit den unteren Längsreflektoren (14b) in einem Winkel von mehr als 180° aufeinanderstoßen.

8. Arbeitsplatzleuchte nach einem der Ansprüche 1 bis 7, dadurch gekennzeichnet, daß der Bewegungsmelder (16) in dem mittleren Leuchtenabschnitt (12) ohne Lichtaustrittsöffnung angeordnet ist.

## Claims

1. Workplace light fixture which can be suspended from a ceiling and is provided with a louver and which further comprises a brightness sensor detecting the intensity of illumination in the region of the working plane within a limited angular region, an adjustment of the light source of the workplace light fixture depending on the detected intensity of illumination in the region of the working plane being provided, the light fixture comprising three sections in the longitudinal direction of the light fixture, in particular a first outer light fixture section (11) with a light outlet opening and built in louver (14) for the deflection of the light, a second central light fixture section (12) from which no light emerges, in the region of which the brightness sensor (15) is arranged, and a third outer light fixture section (13) with light outlet openings and built in louver (14) for the deflection of the light which is constructed similarly to the first outer light fixture section (11),
characterised in that the light fixture louver (14) is constructed such in the two outer light fixture sections (11, 13) that a direct part of the luminous flux (17) originating directly from the lamp emerges upwardly from the light fixture and also an indirect part of the luminous flux (18) emerges upwardly which is reflected at the longitudinal reflectors (14a), and that a part of the luminous flux (19) emerging downwardly from the light fixture leaves the lamp in a direct manner and an indirect part of the luminous flux (20) emerges downwardly which is reflected at longitudinal reflectors (14b) and concentrated in the direction towards the workplace to be illuminated, below the lamps (21) a horizontal perforated metal sheet (24) being provided in the two outer light fixture sections (11, 13), and shortly below the perforated metal sheet (24) at both sides a shading sheet (25) being provided extending in each case from the longitudinal reflectors (14b) horizontally into the interior of the light fixture, by means of which the part of the light emerging downwardly from the light fixture is decreased and that part of the light emerging upwardly from the light fixture is increased.

2. Workplace light fixture as claimed in claim 1, characterised in that in the central closed light fixture section (12) having no emergency of light a motion detector (16) preferably working on the basis of infrared light is provided which is connected to a switch (17) which automatically switches on the light fixture when motions are detected in the region of the workplace and switches out the light fixture when no motions are detected over a longer period of time.

3. Workplace light fixture as claimed in claim 1 or 2, characterised in that it is suspended at a distance from the ceiling above the workplace to be illuminated and in front of the person sitting at the workplace.

4. Workplace light fixture as claimed in any one of claims 1 to 3, characterised in that the lamps (21) are arranged approximately in the upper third of the light fixture housing (10) and in the longitudinal direction of the light fixture.

5. Workplace light fixture as claimed in any one of claims 1 to 4, characterised in that in each of the two outer light fixture sections (11, 13) in every case one compact fluorescent lamp with interconnected fluorescent lamp strips is arranged, the axes of which extend symmetrically and parallel to the vertical central plane (22) of the light fixture in the longitudinal direction of the light fixture.

6. Workplace light fixture as claimed in any one of claims 1 to 5, characterised in that in each outer light fixture section (11, 13) in every case two lower longitudinal reflectors (14b) bordering on the light outlet openings at both sides are provided, said reflectors being preferably concavely curved and extend beyond the horizontal central plane (23) of the light fixture housing (10) towards the top and are further adjusted at an angle relative to the vertical so as to be downwardly and inwardly inclined.

7. Workplace light fixture as claimed in any one of claims 1 to 6, characterised in that the lower longitudinal reflectors (14b) are followed by upper longitudinal reflectors (14a) which are preferably concavely curved and are inclined at an acute angle inwardly and upwardly relative to the vertical and rest against the lower longitudinal reflectors (14b) at an angle of more than 180°.

8. Workplace light fixture as claimed in any one of claims 1 to 7, characterised in that the motion detector (16) is arranged in the central light fixture section (12) having no light outlet opening.

## Revendications

1. Appareil d'éclairage pour plan de travail, pouvant être suspendu à un plafond, appareil présentant un capteur de luminosité, qui détecte l'intensité lumineuse dans la zone du plan de travail au sein d'un dune zone angulaire spatiale limitée, où est prévu un réglage de la source lumineuse de l'appareil d'éclairage en fonction de la luminosité captée dans la zone du plan de travail, où le luminaire présente, vu en direction longitudinale de l'appareil d'éclairage, trois compartiments partiels, à savoir un premier compartiment extérieur de luminaire (11) avec une ouverture d'échappement de lumière et trame intégrée (14) pour la déviation de la lumière, un deuxième compartiment - moyen - de luminaire (12), dont ne s'échappe pas de lumière, et dans la région duquel est disposé le capteur de luminosité (15) et un troisième compartiment - extérieur - de luminaire (13) avec des ouvertures de sortie de lumière et avec une trame de luminaire intégrée (14) pour la déviation de la lumière, troisième compartiment qui est de structure similaire au premier compartiment extérieur de luminaire (11)
caractérisé en ce que la trame de luminaire (14) dans les deux compartiments extérieurs (11, 13) du luminaire est conçue de manière telle qu'un flux partiel direct de lumière issu de la lampe s'échappe vers le haut du luminaire et qu'un flux partiel indirect de lumière (18) s'échappe également vers le dessus, flux qui est réfléchi par des réflecteurs longitudinaux (14a) et qu'un flux partiel de lumière (19) issu directement de la lampe du luminaire s'échappe vers le dessous tandis que vers le dessous s'échappe une flux lumineux indirect (20), lequel est réfléchi par les réflecteurs longitudinaux (14b) et est focalisé en direction du plan de travail à éclairer, une tôle perforée horizontale (24) étant disposée au-dessous des lampes (21) dans les deux compartiments de luminaire extérieurs (11, 13),
en ce qu'un peu au-dessous de la tôle perforée (24), des deux côtés, il est prévu une tôle d'obscurcissement (25) issue des réflecteurs longitudinaux (14b) et s'étendant horizontalement vers l'intérieur du luminaire, tôle d'obscurcissement par laquelle la proportion de flux lumineux qui s'échappe vers le dessous du luminaire est diminuée tandis que la proportion de flux lumineux qui s'échappe vers le dessus est accrue.

2. Appareil d'éclairage pour plan de travail suivant la revendication 1, caractérisé en ce que dans le compartiment moyen fermé (12) du luminaire sans échappement de lumière est disposé un dispositif de signalement de mouvements (16) fonctionnant de préférence à base de rayonnement infrarouge, dispositif qui est en communication avec un commutateur (17) qui met automatiquement en fonction le luminaire lorsque des mouvements dans la région du plan de travail sont enregistrés, et qui coupe automatiquement le luminaire lorsque pendant une période de temps prolongée ne sont plus enregistrés des mouvements.

3. Appareil d'éclairage pour plan de travail suivant les revendications 1 ou 2, caractérisé que cet appareil est suspendu à distance du plafond au-dessus du plan de travail à éclairer et devant la personne assise devant le plan de travail.

4. Appareil d'éclairage pour plan de travail suivant l'une quelconque des revendications de 1 à 3, caractérisé en ce que les lampes (21) sont disposées sensiblement dans le tiers supérieur du boîtier (10) du luminaire et en direction longitudinale du luminaire.

5. Appareil d'éclairage pour plan de travail suivant l'une quelconque des revendications de 1 à 4, caractérisé en ce que dans chacun des deux compartiments extérieurs (11, 13) du luminaire est disposée une lampe à fluorescence avec des tubes fluorescents connectés, dont les axes sont orientés symétriquement et parallèlement au plan médian vertical (22) du luminaire en direction longitudinale du luminaire.

6. Appareil d'éclairage pour plan de travail suivant l'une quelconque des revendications de 1 à 5, caractérisé en ce que dans chaque compartiment extérieur (11, 13) sont prévus deux réflecteurs longitudinaux inférieurs (14b) délimitant l'ouverture d'échappent de lumière des deux côtés, réflecteurs (14b) qui présentent de préférence une courbure concave et qui sont étendus par-delà du plan médian horizontal (23) du boîtier (10) du luminaire vers le haut et sont inclinés suivant un angle par rapport à la verticale vers le bas et vers l'intérieur.

7. Appareil d'éclairage pour plan de travail suivant l'une quelconque des revendications de 1 à 6, caractérisé en ce qu'aux réflecteurs longitudinaux inférieurs (14b) se raccordent des réflecteurs longitudinaux supérieurs (14b) de préférence à courbure concave, inclinés d'un angle aigu par rapport à la verticale vers l'intérieur et vers le haut, et qui forment avec les réflecteurs longitudinaux inférieurs un angle supérieur à 180°.

8. Appareil d'éclairage pour plan de travail suivant l'une quelconque des revendications de 1 à 7, caractérisé en ce que le dispositif de signalement de mouvements (16) est disposé dans le compartiment moyen (12) du luminaire, sans ouverture d'échappement de lumière.
